# EUROPEAN PATENT APPLICATION

(11) **EP 4 539 487 A1**
(43) Date of publication of application: **16.04.2025**
(21) Application number: 23843147.2
(22) Date of filing: 11.05.2023
(51) Int. Cl.: H04N 23/661, H04N 23/80, H04N 23/667, H04N 23/90, H04N 23/65

(54) **MULTI-MASTER-BASED IMAGE SENSING MODULE CONTROL METHOD AND DEVICE THEREOF**

(30) Priority: 18.07.2022 KR 20220088591; 26.08.2022 KR 20220107883
(71) Applicant: Samsung Electronics Co., Ltd., Suwon-si, Gyeonggi-do 16677 (KR)
(72) Inventor: HAN, Daejung, Suwon-si Gyeonggi-do 16677 (KR)
(74) Representative: Walaski, Jan Filip
(86) International application number: PCT/KR2023/006391
(87) International publication number: WO 2024/019289

(57) **Abstract**

Provided are a multi-master-based image-sensing module control method and a device thereof. According to an embodiment, the device may include a sensor group including at least one image-sensing module. The device may include a first master. The first master may initialize the at least one image-sensing module through a first interface and generate registration information related to the first interface of the at least one image-sensing module. The first master may control the at least one image-sensing module in a first image-processing mode by using the registration information. The device may include a second master. The second master may receive the registration information from the first master. The second master may control the at least one image-sensing module in a second image-processing mode by using the registration information.

## Description

### TECHNICAL FIELD

The following embodiments relate to a control method of a multi-master-based image-sensing module and a device thereof.

### BACKGROUND ART

Recently, various and complex functions are being integrated into a mobile device, and accordingly, the complexity of connections between devices performing each function may increase. For example, such a connection may include an external interface, such as a physical cable, and an interface in a printed circuit board (PCB) circuit. Recently, mobile devices may provide various cameras such as a front camera, a rear camera, a wide-angle camera, and a zoom camera. In addition, various sensors and drivers providing additional functions, such as an illuminance sensor, a flicker sensor, and an autofocusing (AF) device, may be provided to improve the image quality of these various cameras. Various cameras, various sensors, and various drivers may be connected through a standardized interface.

### DISCLOSURE OF THE INVENTION

### TECHNICAL SOLUTIONS

According to an embodiment, an electronic device includes a sensor group including at least one image-sensing module. The electronic device includes a first master. The first master is configured to initialize the at least one image-sensing module through a first interface and configured to generate registration information associated with the first interface of the at least one image-sensing module. The first master is configured to control the at least one image-sensing module using the registration information in a first image-processing mode. The electronic device includes a second master. The second master is configured to receive the registration information from the first master. The second master is configured to control the at least one image-sensing module using the registration information in a second image-processing mode.

According to an embodiment, a control method of a first master includes initializing at least one image-sensing module through a first interface and generating registration information associated with the first interface of the at least one image-sensing module. The control method of the first master includes providing the registration information to a second master. The control method of the first master includes controlling the at least one image-sensing module through the first interface in a first image-processing mode. The second master is configured to control the at least one image-sensing module through the first interface in a second image-processing mode.

According to an embodiment, an electronic device includes a camera group including at least one camera module. The electronic device includes a first interface that uses a first bandwidth. The electronic device includes a second interface that uses a second bandwidth that is wider than the first bandwidth. The electronic device includes an application processor (AP). The AP is configured to initialize the at least one camera module through the first interface and configured to generate registration information associated with the first interface of the at least one camera module. The AP is configured to control the at least one camera module using the registration information in a first image-processing mode. The AP is configured to receive high-resolution image data through a second interface in the first image-processing mode. The electronic device includes a sensor hub. The sensor hub is configured to receive the registration information from the AP. The sensor hub is configured to control the at least one camera module using the registration information in a second image-processing mode. The sensor hub is configured to receive low-resolution image data through the first interface. The AP and the sensor hub are implemented as separate chips. First power to the AP is supplied separately from second power to the sensor hub.

### BRIEF DESCRIPTION OF DRAWINGS

FIG. 1 is a block diagram illustrating an electronic device in a network environment, according to an embodiment.
FIGS. 2A to 2C are diagrams illustrating examples of an electronic device that uses a multi-master, according to an embodiment.
FIG. 3 is a diagram illustrating an example of a power management structure of a multi-master, according to an embodiment.
FIG. 4 is a flowchart illustrating an example of a slave registration operation, according to an embodiment.
FIG. 5 is a flowchart illustrating an example of an operation of a multi-master in each image-processing mode, according to an embodiment.
FIG. 6 is a flowchart illustrating an example of an operation of a multi-master in a low-power mode, according to an embodiment.
FIG. 7 is a flowchart illustrating an example of a control method of a first master, according to an embodiment.
FIG. 8 is a diagram illustrating an example of an electronic device that uses an application processor (AP) and a sensor hub as multi-masters, according to an embodiment.

### BEST MODE FOR CARRYING OUT THE INVENTION

Hereinafter, embodiments will be described in detail with reference to the accompanying drawings. When describing the embodiments with reference to the accompanying drawings, like reference numerals refer to like elements and a repeated description related thereto will be omitted.

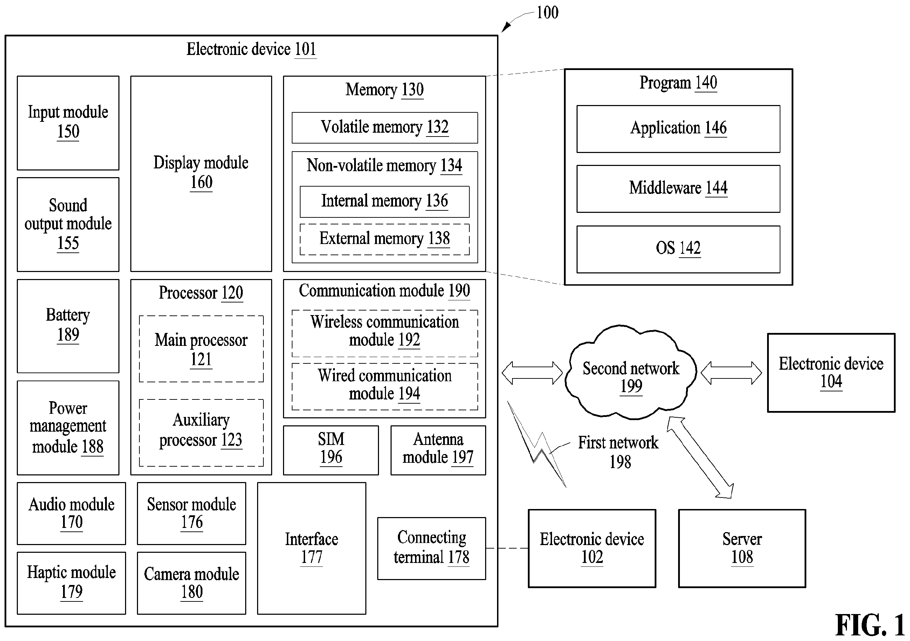

FIG. 1 is a block diagram illustrating an electronic device 101 in a network environment 100, according to an embodiment. Referring to FIG. 1, the electronic device 101 in the network environment 100 may communicate with an electronic device 102 via a first network 198 (e.g., a short-range wireless communication network), or communicate with at least one of an electronic device 104 and a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a motor 187, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computations. According to an embodiment, as at least a part of data processing or computations, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specifically for artificial intelligence model processing. An artificial intelligence model may be generated by machine learning. The machine learning may be performed by, for example, the electronic device 101, in which artificial intelligence is performed, or performed via a separate server (e.g., the server 108). Learning algorithms may include, but are not limited to, for example, supervised learning, unsupervised learning, semi-supervised learning, or reinforcement learning. The artificial intelligence (AI) model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130 and may include, for example, an operating system (OS) 142, middleware 144, or an application 146.

The input module 150 may receive, from outside (e.g., a user) the electronic device 101, a command or data to be used by another component (e.g., the processor 120) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a recording. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a control circuit for controlling a display, a hologram device, or a projector and control circuitry to control its corresponding one of the display, the hologram device, and the projector. According to an embodiment, the display module 160 may include a touch sensor adapted to detect a touch, or a pressure sensor adapted to measure the intensity of force of the touch.

The audio module 170 may convert sound into an electric signal or vice versa. According to an embodiment, the audio module 170 may obtain the sound via the input module 150 or output the sound via the sound output module 155 or an external electronic device (e.g., the electronic device 102, such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101 and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used by the electronic device 101 to couple with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may physically connect to an external electronic device (e.g., the electronic device 102). According to an embodiment, the connecting terminal 178 may include, for example, an HDMI connector, a USB connector, an SD card connector, or an audio connector (e.g., a headphones connector).

The haptic module 179 may convert an electric signal into a mechanical stimulus (e.g., a vibration or a movement) or an electrical stimulus, which may be recognized by a user via their tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, and flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell, which is not rechargeable, a secondary cell, which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., an AP) and that support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device, for example, the electronic device 104, via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., an antenna array). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to various embodiments, the antenna module 197 may form a mmWave antenna module. According to an embodiment, the mmWave antenna module may include a PCB, an RFIC on a first surface (e.g., the bottom surface) of the PCB, or adjacent to the first surface of the PCB and capable of supporting a designated high-frequency band (e.g., a mmWave band), and a plurality of antennas (e.g., array antennas) disposed on a second surface (e.g., the top or a side surface) of the PCB, or adjacent to the second surface of the PCB and capable of transmitting or receiving signals of the designated high-frequency band.

At least some of the above-described components may be coupled mutually and exchange signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device (e.g., the electronic device 104) via the server 108 coupled with the second network 199. Each of the external electronic devices (e.g., the electronic device 102 or 104) may be a device of the same type as or a different type from the electronic device 101. According to an embodiment, all or some of operations to be executed by the electronic device 101 may be executed by one or more external electronic devices (e.g., the electronic devices 102 and 104 and the server 108). For example, if the electronic device 101 needs to perform a function or a service automatically, or in response to a request from a user or another device, the electronic device 101, instead of, or in addition to, executing the function or the service, may request the one or more external electronic devices to perform at least part of the function or service. The one or more external electronic devices receiving the request may perform the at least part of the function or service, or an additional function or an additional service related to the request and may transfer a result of the performance to the electronic device 101. The electronic device 101 may provide the result, with or without further processing the result, as at least part of a response to the request. To that end, cloud computing, distributed computing, mobile edge computing (MEC), or client-server computing technology may be used, for example. The electronic device 101 may provide ultra low-latency services using, e.g., distributed computing or MEC. In an embodiment, the external electronic device (e.g., the electronic device 104) may include an Internet-of-things (IoT) device. The server 108 may be an intelligent server using machine learning and/or a neural network. According to an embodiment, the external electronic device (e.g., the electronic device 104) or the server 108 may be included in the second network 199. The electronic device 101 may be applied to intelligent services (e.g., a smart home, a smart city, a smart car, or healthcare) based on 5G communication technology or IoT-related technology.

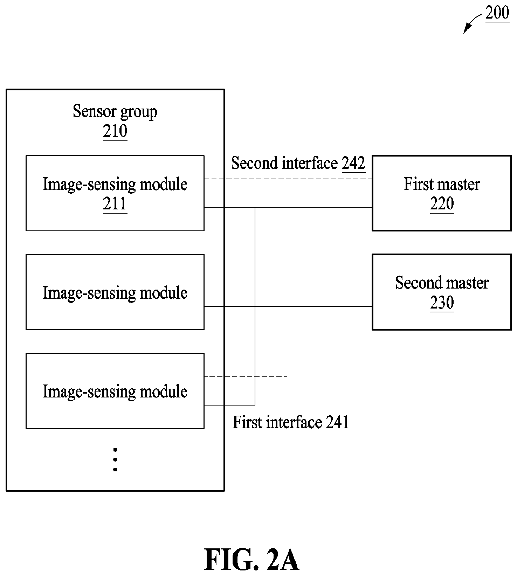

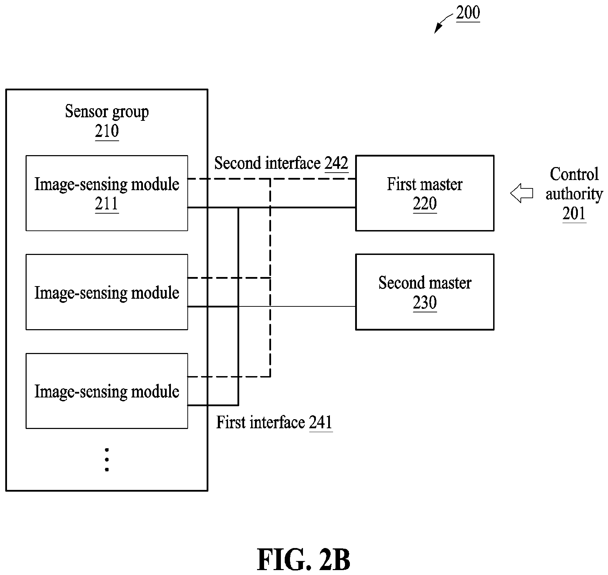

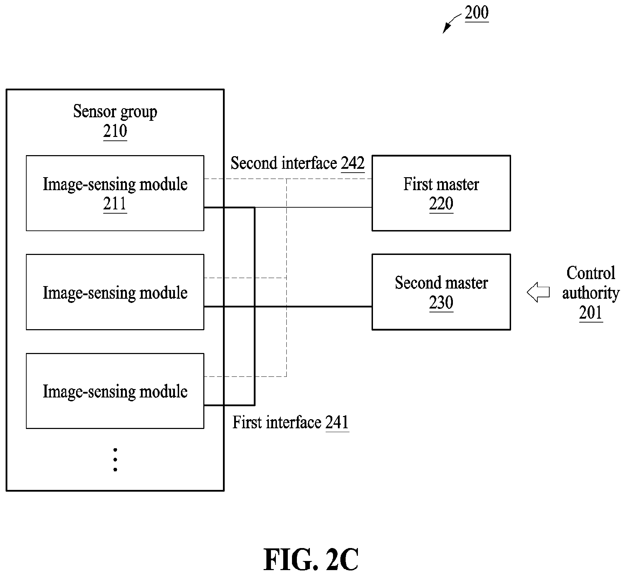

FIGS. 2A to 2C are diagrams illustrating examples of an electronic device that uses a multi-master, according to an embodiment. Referring to FIG. 2, an electronic device 200 (e.g., the electronic device 101 of FIG. 1) may include a sensor group 210 including at least one image-sensing module 211 (e.g., the sensor module 176 of FIG. 1 and the camera module 180 of FIG. 1). The electronic device 200 may include a first master 220 (e.g., the main processor 121 of FIG. 1). The first master 220 may initialize the at least one image-sensing module 211 through a first interface 241 (e.g., the interface 177 of FIG. 1) and generate registration information associated with the first interface 241 of the at least one image-sensing module 211. The first master 220 may control the at least one image-sensing module 211 using the registration information in a first image-processing mode. The electronic device 200 may include a second master 230 (e.g., the auxiliary processor 123 of FIG. 1). The second master 230 may receive the registration information from the first master 220. The second master 230 may control the at least one image-sensing module 211 using the registration information in a second image-processing mode.

The first master 220 and the second master 230 may share the first interface 241.

The first master 220 and the second master 230 may be implemented as separate chips. First power to the first master 220 may be supplied separately from second power to the second master 230.

When the first master 220 operates in a low-power mode, the second master 230 may monitor image data in the second image-processing mode. The first power may be adjusted to a first level for the low-power mode. The second power may be adjusted to a second level for the second image-processing mode.

The second master 230 may have control authority over the at least one image-sensing module 211 in the second image-processing mode and monitor the image data through the at least one image-sensing module 211.

The first master 220 may wake up from the low-power mode and have the control authority when a wake-up condition according to the image data is recognized by the second master 230.

The first master 220 may have the control authority over the at least one image-sensing module 211 in the first image-processing mode. The second master may have the control authority in the second image-processing mode.

The first master 220 may control the at least one image-sensing module 211 through the first interface 241 that uses a first bandwidth in the first image-processing mode. The first master 220 may receive high-resolution image data through a second interface 242 that uses a second bandwidth. The second master 230 may control the at least one image-sensing module 211 through the first interface 241 in the second image-processing mode. The second master 230 may receive low-resolution image data through the first interface 241. The second bandwidth may be wider than the first bandwidth.

When a camera application is executed, the first master 220 may process the high-resolution image data in the first image-processing mode. When the camera application is terminated, the second master may process the low-resolution image data in the second image-processing mode.

When the camera application is not executed, the second master 230 may have the control authority over the at least one image-sensing module 211 and monitor the appearance of a target object in the second image-processing mode. When the target object is recognized by the second master 230, the first master 220 may have the control authority.

The first master 220 may correspond to a main processor of the electronic device 200 such as an AP. The first master 220 may show higher performance than the second master 230 and process more diverse tasks. The second master 230 may correspond to an auxiliary processor of the electronic device 200 such as a sensor hub or a microcontroller unit (MCU). The second master 230 may use less power than the first master 220. The at least one image-sensing module 211 may sense an image in various ways. For example, the at least one image-sensing module 211 may include various cameras such as a front camera, a wide-angle camera, an ultra-wide-angle camera, a zoom camera, a main camera, an infrared camera, and a depth camera.

As the functions provided by the electronic device 200 become more complex, the role of the first master 220 may become more diverse, and the first master 220 always operating for all functions may cause a high level of power consumption. The second master 230 may use less power than the first master 220. Depending on the situation, the first master 220 may be given a break, and when the second master 230 operates instead of the first master 220, power consumption may be reduced.

According to an embodiment, the electronic device 200 may provide a monitoring function that monitors changes in the image data generated by the at least one image-sensing module 211. For example, the electronic device 200 may perform a follow-up operation when the target object is recognized from the image data. For example, the target object may include surrounding objects and/or surrounding environments. The monitoring function may require a long operating time such as a constant operation. When the monitoring function is provided using the first master 220, the constant operation of the first master 220 may result in large power consumption. When the monitoring function is provided by the second master 230, the first master 220 may rest depending on the situation. The electronic device 200 may improve power efficiency through the master dualization of the first master 220 and the second master 230.

FIG. 2B may represent a state in which the first master 220 has control authority 201 and controls the at least one image-sensing module 211. Depending on the situation, the first master 220 or the second master 230 may have the control authority 201. The control authority 201 may be granted according to a request from the remaining one that is waiting for any one of the masters 220 and 230, which are currently controlling a slave, or may be granted according to a predefined scenario when a corresponding request is made.

The first master 220 may have the control authority 201 when performing a slave registration procedure. In the registration procedure, the at least one image-sensing module 211 may be registered as the slave. The first master 220 may initialize the at least one image-sensing module 211 through the first interface 241 and generate the registration information associated with the first interface 241 of the at least one image-sensing module 221. For example, the registration information may include a unique address to access the at least one image-sensing module 221 through the first interface 241. For example, the unique address may include a physical address (e.g., a pin number in which the at least one image-sensing module 221 is connected to the first interface 241). The first master 220 may communicate with the at least one image-sensing module 221 while calling the at least one image-sensing module 221 using the unique address.

The first master 220 and the second master 230 may share the registration information. For example, the first master 220 may provide the registration information to the second master 230 through the first interface 241. Since the first master 220 and the second master 230 share the first interface 241, the second master 230 may control the at least one image-sensing module 221 using the registration information associated with the first interface 241. The second master 230 may communicate with the at least one image-sensing module 221 while calling the at least one image-sensing module 221 using the unique address. The first interface 241 may correspond to a serial interface. Any one of the masters 220 and 230, which has the control authority over the at least one image-sensing module 221, may perform one-to-one communication with the at least one image-sensing module 221 using the unique address.

The at least one image-sensing module 211 may generate the image data. The image data may include high-quality image data and low-quality image data. The high-quality image data may correspond to image data generated without a certain performance limitation on the at least one image-sensing module 211. For example, the high-quality image data may be used when a user captures an image through the camera application. The camera application may include a camera application provided by an OS (e.g., the OS 142 of FIG. 1) of the electronic device 200 and/or a camera application provided by a third party. The camera application may provide various capturing modes, such as image capturing and video capturing based on the high-quality image data.

The low-quality image data may correspond to image data generated with a certain performance limitation on the at least one image-sensing module 211. For example, when the monitoring function is performed on the image data, the low-quality image data may be used for a low-power operation. For example, the camera application may be executed in the foreground, and the monitoring function may be executed in the background. However, the execution environments of the camera application and the monitoring function are not limited thereto, and the camera application may be executed in the background or the monitoring function may be executed in the foreground.

The first master 220 and the second master 230 may process the image data in an image-processing mode. An image-processing mode in which the first master 220 processes the high-quality image data may be referred to as the first image-processing mode, and an image-processing mode in which the second master 230 processes the low-quality image data may be referred to as the second image-processing mode. The first master 220 may have the control authority 201 in the first image-processing mode that uses the high-quality image data, and the second master 230 may have the control authority 201 in the second image-processing mode that uses the low-quality image data.

The first master 220 and the second master 230 may acquire the image data (e.g., raw image data) from the at least one image-sensing module 211 and perform image processing. The first master 220 may include an ISP block. The first master 220 may receive the high-quality image data and generate a high-quality output image using an ISP. An image-processing mode in which the first master 220 processes the high-quality image data may be referred to as the first image-processing mode. The first master 220 may display the high-quality output image on a display module (e.g., the display module 160 of FIG. 1) or store the high-quality output image in a memory (e.g., the memory 130).

The second master 230 may receive the low-quality image data and perform a monitoring operation. An image-processing mode in which the second master 230 processes the low-quality image data may be referred to as the second image-processing mode. The monitoring operation may be referred to as a recognition operation. Since the recognition operation focuses on information inside an image, the monitoring operation may be performed with lower image processing performance compared to the image size, resolution, and output speed required for general image processing. For example, the low-quality image data required for the recognition operation may have a size of about 640*480 corresponding to a video graphics array (VGA).

The first master 220 may have the control authority 201 when executing a certain application that uses the high-quality image data in the first image-processing mode. For example, the certain application may include the camera application. When the high-quality image data is used, image processing may correspond to the main operation of the electronic device 200, so the control authority 201 may be granted to the first master 220.

The first master 220 may control the at least one image-sensing module 211 through the first interface 241 and receive the high-quality image data through the second interface 242. For example, the first master 220 may perform control, such as acquisition of a full raw image and autofocusing (AF), on the at least one image-sensing module 211 through the first interface 241. Each image-sensing module of the sensor group 210 may operate according to a current image-processing mode. The first master 220 may perform one-to-one individual communication with each image-sensing module using a unique address of each image-sensing module to prevent collisions between the image-sensing modules. When the communication is completed, the first master 220 may sequentially communicate with other image-sensing modules. The second interface 242 may use a wider bandwidth than the first interface 241. The first interface 241 and the second interface 242 may correspond to a camera serial interface (CSI). For example, the first interface 241 may include an inter-integrated circuit (I2C) and/or an improved inter-integrated circuit (I3C), and the second interface 242 may include a physical layer (C-PHY) and/or a D-PHY.

The I3C may correspond to a relatively high-speed interface compared to the I2C. According to an embodiment, the I3C may be used for a master change and the monitoring operation. The master change may refer to an operation in which the control authority 201 is transferred from one master (e.g., any one of the first master 220 and the second master 230) to the other master (e.g., the other one of the first master 220 and the second master 230). The first interface 241 and the second interface 242 may be used interchangeably. For example, in the first image-processing mode that processes the high-quality image data, the high-quality image data may be transmitted through the first interface 241, and a command for controlling the first image-processing mode may be transmitted through the second interface 242.

FIG. 2C may represent a state in which the second master 230 has the control authority 201 and controls the at least one image-sensing module 211. The control authority 201 may be transferred from the first master 220 to the second master 230 by the master change. The master change may be performed by a request and/or command from any one master (e.g., any one of the first master 220 and the second master 230) or according to a predetermined scenario. A control signal such as the request and/or command for the master change may be transmitted from any one master (e.g., any one of the first master 220 and the second master 230) to the other master (e.g., the other one of the first master 220 and the second master 230) through the first interface 241.

The second master 230 may have the control authority 201 when the processing of the low-quality image data is required in the second image-processing mode. For example, when the image data is monitored to release the low-power mode, the low-quality image data may be used when the monitoring function is performed such as monitoring the image data to execute a certain application. More specifically, when the first master 220 operates in the low-power mode, the second master 230 may monitor the sensing of motion in the image data or the detection of the target object (e.g., a user face) in the image data. The second master 230 may perform the monitoring function using the low-quality image data.

The second master 230 may control the at least one image-sensing module 211 through the first interface 241 and receive the low-quality image data through the first interface 241. For example, the second master 230 may perform control, such as the acquisition of an image with a small size and AF, on the at least one image-sensing module 211 through the first interface 241. The second master 230 may control the at least one image-sensing module 211 so that the at least one image-sensing module 211 operates with a minimum specification for the monitoring function and may also minimize functions related to image quality such as AF. The second master 230, like the first master 220, may sequentially perform one-to-one individual communication with each image-sensing module using the unique address of each image-sensing module and prevent collisions between the image-sensing modules. The first interface 241 may have a smaller bandwidth than the second interface 242, and the low-quality image data may have a size that is small enough to be transmitted to the first interface 241.

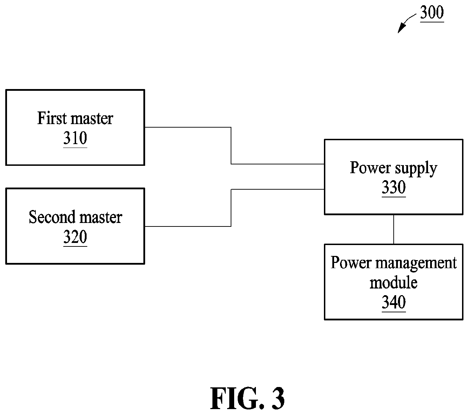

FIG. 3 is a diagram illustrating an example of a power management structure of a multi-master, according to an embodiment. Referring to FIG. 3, an electronic device 300 (e.g., the electronic device 101 of FIG. 1 and the electronic device 200 of FIGS. 2A to 2C) may include a power supply 330 configured to supply power to a first master 310 (e.g., the main processor 121 of FIG. 1 and the first master 220 of FIGS. 2A to 2C) and a second master 320 (e.g., the auxiliary processor 123 of FIG. 1 and the second master 230 of FIGS. 2A to 2C). The electronic device 300 may include a power management module 340 (e.g., the power management module 188 of FIG. 1) configured to control the power supply 330.

The first master 310 and the second master 320 may be implemented as separate chips. The power supply 330 may separately supply first power to the first master 310 and second power to the second master 320. When the first master 310 operates in a low-power mode, the second master 320 may perform image monitoring using low-quality image data in a second image-processing mode. The power management module 340 may adjust the first power to a first level for the low-power mode and adjust the second power to a second level for the second image-processing mode.

When multi-masters are implemented as a single chip, it may be difficult to independently control the power of each master. As the first master 310 and the second master 320 are implemented as separate chips and the first power to the first master 310 and the second power to the second master 320 are controlled separately, the second master 320 may independently perform a monitoring function using the second power, and the first master 310 may operate in the low-power mode with the minimum first power.

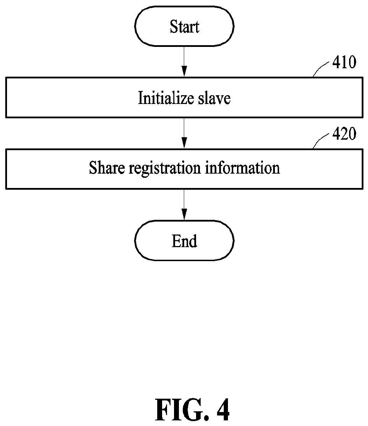

FIG. 4 is a flowchart illustrating an example of a slave registration operation, according to an embodiment. Referring to FIG. 4, in operation 410, a slave may be initialized. Operation 410 may be performed in response to the power-on of an electronic device (e.g., the electronic device 101 of FIG. 1, the electronic device 200 of FIGS. 2A to 2C, and the electronic device 300 of FIG. 3). The first master (e.g., the first master 220 of FIGS. 2A to 2C) may perform initialization through a first interface (e.g., the interface 177 of FIG. 1 and the first interface 241 of FIG. 2). The slave may include at least one image-sensing module (e.g., the sensor module 176 of FIG. 1, the camera module 180 of FIG. 1, and the image-sensing module 211 of FIGS. 2A to 2C). The first master may generate registration information of the slave through the initialization procedure.

In operation 420, the registration information may be shared. For example, the first master may provide the registration information to a second master (e.g., the auxiliary processor 123 of FIG. 1 and the second master 230 of FIGS. 2A to 2C). As a result, the slave may be registered in both the first master and the second master. Any one of the first master and the second master, which has control authority, may control the at least one image-sensing module using the registration information.

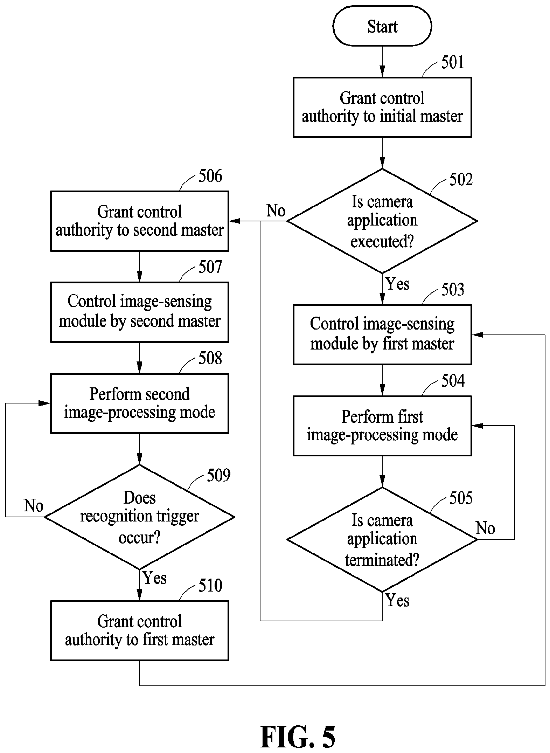

FIG. 5 is a flowchart illustrating an example of an operation of a multi-master in each image-processing mode, according to an embodiment. Referring to FIG. 5, in operation 501, control authority may be granted to an initial master. The initial master may refer to a master having the initial control authority among multi-masters. A first master (e.g., the main processor 121 of FIG. 1 and the first master 220 of FIGS. 2A to 2C) or a second master (e.g., the auxiliary processor 123 of FIG. 1 and the second master 230 of FIGS. 2A to 2C) may correspond to the initial master. For example, the first master may be designated as the initial master after the initialization and registration procedure are performed by the first master.

In operation 502, it may be determined whether a camera application is executed. When the camera application is executed, in operation 503, an image-sensing module (e.g., the sensor module 176 of FIG. 1, the camera module 180 of FIG. 1, and the image-sensing module 211 of FIGS. 2A to 2C) may be controlled by the first master. The first master may have the control authority and control the image-sensing module. The first master may control the image-sensing module so that the image quality with priority on the definition, such as an image sensor setting required for a first image-processing mode and an additional function setting such as AF, may be secured. In operation 504, the first master may perform the first image-processing mode. The first image-processing mode may refer to an image-processing mode that uses high-quality image data. The first master may process the high-quality image data according to a request from the camera application in the first image-processing mode and display or store an output image.

In operation 505, it may be determined whether the camera application is terminated. When the camera application is still executed, the first image-processing mode may be performed continuously in operation 504. In operation 506, when the camera application is terminated, the control authority may be granted to the second master. When it is determined that the camera application is not executed in operation 502, operation 506 may be performed. Master change may occur in operation 506.

In operation 507, the image-sensing module may be controlled by the second master. The second master may have the control authority and control the image-sensing module. The second master may change an additional function setting, such as an image sensor setting and AF, so that the image-sensing module may perform a monitoring operation. In operation 508, the second master may perform a second image-processing mode. The second image-processing mode may refer to an image-processing mode that uses low-quality image data. The second master may perform the monitoring operation using the low-quality image data in the second image-processing mode.

In operation 509, it may be determined whether a recognition trigger occurs. The recognition trigger may correspond to a factor that initiates a subsequent operation according to monitoring. For example, the recognition trigger may include the fact that the appearance of a target object is recognized in an image according to monitoring. In operation 510, when the recognition trigger occurs, the control authority may be granted to the first master. The master change may occur in operation 510. In operation 503, the first master may have the control authority and control the image-sensing module.

For example, the target object of the recognition trigger may be a user face, and as the user face is recognized from the low-quality image data, a current image-processing mode may be changed from the second image-processing mode to the first image-processing mode, and the high-quality image data may be generated through the image-sensing module (e.g., a front camera). For example, the target object of the recognition trigger may be image code (e.g., quick response (QR) code and barcode), and as certain image code is recognized from the low-quality image data, the first master may have the control authority and execute a certain application (e.g., a financial application and a mileage management application). In addition, various scenarios in which the master change is performed when a predefined recognition trigger occurs and a subsequent operation is performed by the first master may be defined.

While operations 506 to 509 are performed, the first master may perform another operation other than image processing or may take a rest. In operations 506 to 509, the second master may perform the second image-processing mode, thereby preventing the first master from being overloaded or from consuming unnecessarily large amounts of power. Accordingly, the power consumption of an electronic device (e.g., the electronic device 101 of FIG. 1, the electronic device 200 of FIGS. 2A to 2C, and the electronic device 300 of FIG. 3) may be reduced.

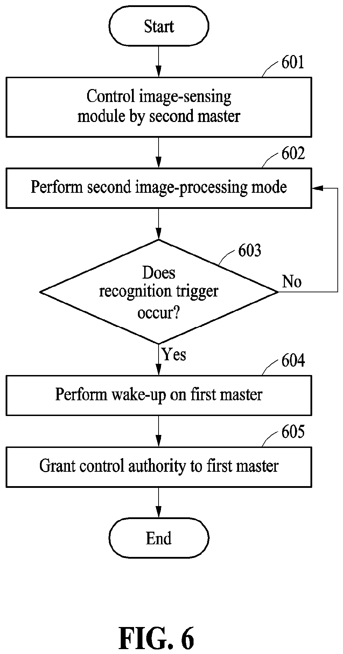

FIG. 6 is a flowchart illustrating an example of an operation of a multi-master in a low-power mode, according to an embodiment. Referring to FIG. 6, in operation 601, an image-sensing module (e.g., the sensor module 176 of FIG. 1, the camera module 180 of FIG. 1, and the image-sensing module 211 of FIGS. 2A to 2C) may be controlled by a second master (e.g., the auxiliary processor 123 of FIG. 1 and the second master 230 of FIGS. 2A to 2C). The second master may have control authority and control the image-sensing module. In operation 602, the second master may perform a second image-processing mode. In operation 603, it may be determined whether a recognition trigger occurs. In operation 604, when the recognition trigger occurs, a wake-up may be performed on a first master, and when the recognition trigger does not occur, operations 602 and 603 may be repeatedly performed. When the first master wakes up, in operation 605, the control authority may be granted to the first master.

Operations 601 to 603 may be performed by the second master when the first master (e.g., the main processor 121 of FIG. 1 and the first master 220 of FIGS. 2A to 2C) is in a low-power mode. For example, in the low-power mode, the first master may be in a standby state while using less power, and at least a portion of a display of an electronic device (e.g., the electronic device 101 of FIG. 1, the electronic device 200 of FIGS. 2A to 2C, and the electronic device 300 of FIG. 3) may be in a turned-off state. For example, while operations 507 to 509 of FIG. 5 are being performed, the first master may enter the low-power mode, and in this case, operations 601 to 603 may be performed as operations 507 to 509. Here, as the recognition trigger occurs, an additional wake-up for the first master in the low-power mode may be executed in operation 604.

Since the second master is implemented independently from the first master, the second master may control the image-sensing module separately, even when the first master enters the low-power state. The first master may wake up according to the monitoring result of the second master and have the control authority. The first master and the second master may cooperate with each other in this way and perform linkage functions such as unlocking a lock screen, automatic execution of a front camera, execution of a certain function of a certain application according to recognition of image code, and brightness adjustment of an auxiliary display through an illuminance sensor. By controlling the image-sensing module through the second master that is independent from the first master, power consumption may be minimized so that the low-power state of the electronic device may be maintained.

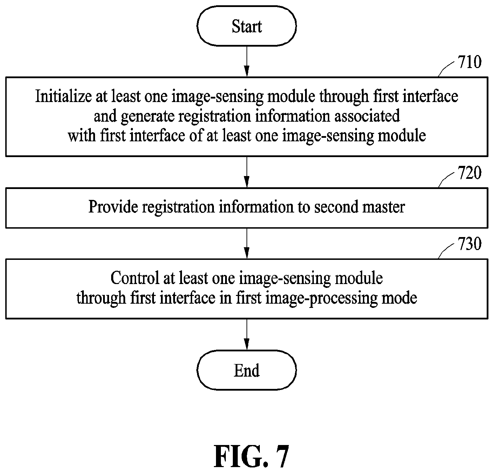

FIG. 7 is a flowchart illustrating an example of a control method of a first master, according to an embodiment. Referring to FIG. 7, in operation 710, a first master (e.g., the main processor 121 of FIG. 1 and the first master 220 of FIGS. 2A to 2C) may initialize at least one image-sensing module (e.g., the sensor module 176 of FIG. 1, the camera module 180 of FIG. 1, and the image-sensing module 211 of FIGS. 2A to 2C) through a first interface (e.g., the interface 177 of FIG. 1 and the first interface 241 of FIG. 2) and may generate registration information associated with the first interface of the at least one image-sensing module. In operation 720, the first master may provide the registration information to a second master. In operation 730, the first master may control the at least one image-sensing module through the first interface in a first image-processing mode. The second master (e.g., the auxiliary processor 123 of FIG. 1 and the second master 230 of FIGS. 2A to 2C) may control the at least one image-sensing module through the first interface in a second image-processing mode.

The first master and the second master may share the first interface.

The first master and the second master may be implemented as separate chips. First power to the first master may be supplied separately from second power to the second master.

When the first master operates in a low-power mode, the second master may monitor image data in the second image-processing mode. The first power may be adjusted to a first level for the low-power mode. The second power may be adjusted to a second level for the second image-processing mode.

The second master may have control authority over the at least one image-sensing module in the second image-processing mode and monitor the image data through the at least one image-sensing module. When a wake-up condition according to the image data is recognized by the second master, the first master may wake up from the low powermode and have the control authority.

The first master may further acquire the control authority over the at least one image-sensing module in the first image-processing mode. The second master may have the control authority in the second image-processing mode.

The first master may further receive high-resolution image data through a second interface (e.g., the interface 177 of FIG. 1 and the second interface 242 of FIGS. 2A to 2C) that uses a second bandwidth. The second master may receive low-resolution image data through the first interface that uses a first bandwidth. The first bandwidth may be wider than the second bandwidth. For example, the second bandwidth may be a high-resolution image-only data interface.

When a camera application is executed, the first master may further process the high-resolution image data in the first image-processing mode. When the camera application is terminated, the second master may process the low-resolution image data in the second image-processing mode.

When the camera application is not executed, the second master may have the control authority over the at least one image-sensing module and monitor the appearance of a target object in the second image-processing mode. When the target object is recognized by the second master, the first master may have the control authority.

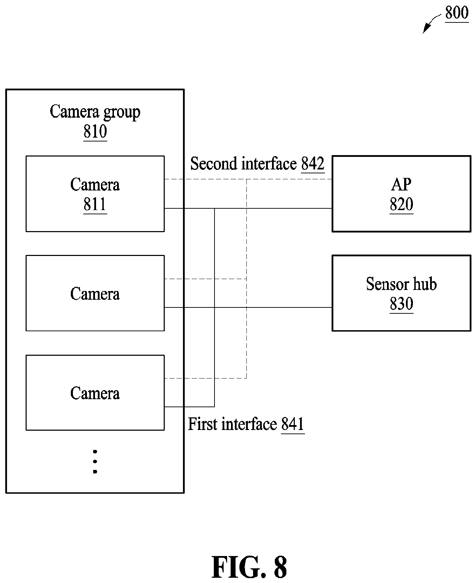

FIG. 8 is a diagram illustrating an example of an electronic device that uses an AP and a sensor hub as multi-masters, according to an embodiment. Referring to FIG. 8, an electronic device 800 (e.g., the electronic device 101 of FIG. 1, the electronic device 200 of FIGS. 2A to 2C, and the electronic device of FIG. 3) may include a camera group including at least one camera module (e.g., the sensor module 176 of FIG. 1, the camera module 180 of FIG. 1, and the image-sensing module 211 of FIGS. 2A to 2C).

The electronic device 800 may include a first interface 841 (e.g., the interface 177 of FIG. 1 and the first interface 241 of FIGS. 2A to 2C) that uses a first bandwidth. The electronic device 800 may include a second interface 842 (e.g., the interface 177 of FIG. 1 and the second interface 242 of FIGS. 2A to 2C) that uses a second bandwidth that is wider than the first bandwidth.

The electronic device 800 may include an AP 820 (e.g., the main processor 121 of FIG. 1, the first master 220 of FIGS. 2A to 2C, and the first master 310 of FIG. 3). The AP 820 may initialize at least one camera module 811 through the first interface 841 and generate registration information associated with the first interface 841 of the at least one camera module 811. The AP 820 may control the at least one image-sensing module 811 using the registration information in a first image-processing mode. The AP 820 may receive high-resolution image data through the second interface 842 in the first image-processing mode.

The electronic device 800 may include a sensor hub 830 (e.g., the auxiliary processor 123 of FIG. 1, the second master 230 of FIGS. 2A to 2C, and the second master 320 of FIG. 3). The electronic device 800 may include an MCU instead of the sensor hub 830. The sensor hub 830 may receive the registration information from the AP 820. The sensor hub 830 may control the at least one camera module 811 using the registration information in a second image-processing mode.

The AP 820 and the sensor hub 830 may be implemented as separate chips. The first power to the AP 820 may be supplied separately from the second power to the sensor hub 830.

The electronic device according to the embodiments disclosed herein may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic device is not limited to those described above.

It should be appreciated that an embodiment of the present disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B," "at least one of A and B," "at least one of A or B," "A, B or C," "at least one of A, B and C," and "at least one of A, B, or C," each of which may include any one of the items listed together in the corresponding one of the phrases, or all possible combinations thereof. Terms, such as "first" or "second", are simply used to distinguish a component from another component and do not limit the components in other aspects (e.g., importance or sequence). It is to be understood that if a component (e.g., a first component) is referred to, with or without the term "operatively" or "communicatively", as "coupled with," "coupled to," "connected with," or "connected to" another component (e.g., a second component), the component may be coupled with the other component directly (e.g., by wire), wirelessly, or via a third component.

As used in connection with embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

An embodiment of the present disclosure may be implemented as software (e.g., the program 140) including one or more commands stored in a storage medium (e.g., an internal memory 136 or an external memory 138) readable by a machine (e.g., the electronic device 101, the electronic device 200, and the electronic device 300). For example, a processor (e.g., the processor 120, the first master 220, the second master 230, the first master 310, the second master 320, the AP 820, and the sensor hub 830) of the machine (e.g., the electronic device 101, the electronic device 200, and the electronic device 300) may call at least one command among the one or more commands stored in the storage medium and execute the at least one command. This may enable the machine to be operated to perform at least one function according to the called at least one command. The one or more commands may include code generated by a compiler or code executable by an interpreter. The machine-readable storage medium may be provided in the form of a non-transitory storage medium. Here, 'non-transitory' only indicates that the storage medium is a tangible device and does not include a signal (e.g., an electromagnetic wave), and this term does not distinguish between a case in which data is stored semi-permanently in the storage medium and a case in which data is stored temporarily in the storage medium.

According to an embodiment, a method according to embodiments of the disclosure may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a sensor group (210;810) comprising at least one image-sensing module (176;180;211;811);
a first master (121;220;310;820) configured to initialize the at least one image-sensing module through a first interface (177;241;841) and generate registration information associated with the first interface of the at least one image-sensing module and configured to control the at least one image-sensing module using the registration information in a first image-processing mode; and
a second master (123;230;320;830) configured to receive the registration information from the first master and configured to control the at least one image-sensing module using the registration information in a second image-processing mode.

2. The electronic device of claim 1, wherein the first master and the second master share the first interface.

3. The electronic device of claim 1 or 2, wherein the first master and the second master are implemented as separate chips,
wherein first power to the first master is supplied separately from second power to the second master.

4. The electronic device of claim 3, wherein the second master is configured to monitor image data in the second image-processing mode when the first master operates in a low-power mode,
wherein the first power is adjusted to a first level for the low-power mode, and the second power is adjusted to a second level for the second image-processing mode.

5. The electronic device of claim 4, wherein
the second master has control authority over the at least one image-sensing module in the second image-processing mode and is configured to monitor the image data through the at least one image-sensing module,
the first master wakes up from the low-power mode and has the control authority when a wake-up condition according to the image data is recognized by the second master.

6. The electronic device of one of claims 1 to 5, wherein
the first master has control authority over the at least one image-sensing module in the first image-processing mode,
the second master has the control authority in the second image-processing mode.

7. The electronic device of one of claims 1 to 6, wherein
the first master is configured to control the at least one image-sensing module through the first interface that uses a first bandwidth in the first image-processing mode and configured to receive high-resolution image data through a second interface (177;242;842) that uses a second bandwidth,
the second master is configured to control the at least one image-sensing module through the first interface in the second image-processing mode and configured to receive low-resolution image data through the first interface,
wherein the second bandwidth is wider than the first bandwidth.

8. The electronic device of one of claims 1 to 7, wherein
the first master is configured to process high-resolution image data in the first image-processing mode when a camera application is executed,
the second master is configured to process low-resolution image data in the second image-processing mode when the camera application is terminated.

9. The electronic device of one of claims 1 to 8, wherein,
when a camera application is not executed, the second master has control authority over the at least one image-sensing module and is configured to monitor an appearance of a target object in the second image-processing mode,
the first master has the control authority when the target object is recognized by the second master.

10. A control method of a first master (121;220;310;820), the control method comprising:
an operation 710 of initializing at least one image-sensing module (176;180;211;811) through a first interface (177;241;841) and generating registration information associated with the first interface of the at least one image-sensing module;
an operation 720 of providing the registration information to a second master (123;230;320;830); and
an operation 730 of controlling the at least one image-sensing module through the first interface in a first image-processing mode,
wherein the second master is configured to control the at least one image-sensing module through the first interface in a second image-processing mode.

11. The control method of claim 10, wherein
the first master and the second master are implemented as separate chips,
the first master and the second master share the first interface,
first power to the first master is supplied separately from second power to the second master.

12. The control method of claim 11, wherein
the second master is configured to monitor image data in the second image-processing mode when the first master operates in a low-power mode,
the first power is adjusted to a first level for the low-power mode, and the second power is adjusted to a second level for the second image-processing mode.

13. The control method of claim 12, wherein
the second master has control authority over the at least one image-sensing module in the second image-processing mode and is configured to monitor the image data through the at least one image-sensing module,
the first master wakes up from the low-power mode and has the control authority when a wake-up condition according to the image data is recognized by the second master.

14. The control method of one of claims 10 to 13, further comprising:
acquiring control authority over the at least one image-sensing module in the first image-processing mode,
wherein the second master has the control authority in the second image-processing mode.

15. The control method of one of claims 10 to 14, further comprising:
receiving high-resolution image data through a second interface (177;242;842) that uses a second bandwidth,
wherein the second master is configured to receive low-resolution image data through the first interface that uses a first bandwidth,
wherein the second bandwidth is wider than the first bandwidth.
